# EUROPÄISCHE PATENTSCHRIFT

(11) **EP 1 079 177 B1**
(45) Veröffentlichungstag und Bekanntmachung des Hinweises auf die Patenterteilung: **12.10.2005**
(21) Anmeldenummer: 00114743.8
(22) Anmeldetag: 08.07.2000
(51) Int. Cl.: F23H 3/02, F23L 1/02, F23L 7/00, C10J 3/34

(54) **Anlage sowie Rostblock für die thermische Behandlung von Abfallstoffen**
Apparatus and grate block for waste incineration
Installation et bloc de grilles pour l'incinération de déchets

(30) Priorität: 20.08.1999 CH 152599
(43) Veröffentlichungstag der Anmeldung: 28.02.2001
(73) Patentinhaber: Von Roll Umwelttechnik AG, 8005 Zürich (CH)
(72) Erfinder: Forsberg, Stefan, 27395 Tomelilla (SE); Zoss, Klaus, 8610 Uster (CH)
(74) Vertreter: Schaad, Balass, Menzl & Partner AG

(56) Entgegenhaltungen:
- EP-A- 0 733 854
- DE-A- 19 736 003
- DE-U- 29 501 162
- US-A- 5 680 824

## Beschreibung

Die Erfindung betrifft eine Anlage für die thermische Behandlung von Abfallstoffen mit einem von Rostblöcken gebildeten Rost, auf dessen Oberfläche die Abfallstoffe zur thermischen Behandlung aufliegen, wobei der Rost Gasdurchlässe aufweist, die mit einer Gasversorgung für die Rostoberfläche in Verbindung stehen. Ferner betrifft die Erfindung einen Rostblock für eine derartige Anlage.

Eine Anlage der eingangs genannten Art ist beispielsweise aus der DE 40 27 908 A1, der DE 196 50 119 C1 oder der EP 0 621 448 B1 bekannt. Bei dieser bekannten Anlage, in der insbesondere Abfallstoffe verbrannt werden, wird der in die Unterwindkammer einströmenden Primärluft Sauerstoff zugesetzt, um eine möglichst schadstoffarme Verbrennung der Brennstoffe zu erzielen. Des weiteren ist es bekannt, aufgrund des unterschiedlich hohen Sauerstoffbedarfs in verschiedenen Bereichen des Rostes den Sauerstoffgehalt der Primärluft zu variieren.

Um eine dem Sauerstoffbedarfsprofil entsprechende Sauerstoffverteilung auf dem Rost zu erzielen, ist bei der bekannten Verbrennungsanlage eine entsprechende Anzahl Unterwindkammern vorgesehen, in die Primärluft unterschiedlichen Sauerstoffgehaltes einströmt. Damit das gewünschte Sauerstoffprofil erhalten bleibt, muss jedoch ein Vermischen der mit Sauerstoff angereicherten Primärluft beim Austreten aus den verschiedenen Unterwindkammern verhindert werden. Ferner darf die Primärluft nicht zu stark mit Sauerstoff angereichert sein, da sich andernfalls in die Unterwindkammer fallende Verbrennungsrückstände, auch Rostdurchfall genannt, ungewollt entzünden. Gleichzeitig muss ein ausreichender Volumenstrom an Primärluft in die Unterwindkammer einströmen, damit einerseits der Rost gekühlt, und andererseits die Gefahr beseitigt wird, dass bei zu geringem Primärluft-Volumenstrom brennbare Gase vom Verbrennungsraum in die Unterwindkammer zurück diffundieren, die mit dem zugegebenen Sauerstoff in der Unterwindkammer ein explosionsfähiges Gemisch bilden.

Ausgehend von diesem Stand der Technik ist es Aufgabe der Erfindung, eine Anlage für die thermische Behandlung von Abfallstoffen bzw. einen Rostblock für eine Anlage bereitzustellen, die eine gezielte Sauerstoffzufuhr ermöglicht und die Nachteile der bekannten Anlagen nicht aufweist.

Die Erfindung löst die Aufgabe durch eine Anlage mit den Merkmalen nach Anspruch 1. Des weiteren wird die Aufgabe durch einen Rostblock mit den Merkmalen nach Anspruch 13 für eine derartige Anlage gelöst. Die erfindungsgemässe Anlage bzw. der Rostblock ist sowohl für die Verbrennung als auch für die thermische Entgasung von Abfallstoffen geeignet.

Durch die Zuführung von Sauerstoff ohne Vermischung mit dem Unterwind direkt an die Stelle des Sauerstoffbedarfes an der Rostoberfläche werden verschiedene Vorteile erzielt. So entfallen die Einschränkungen für die Verbrennungsanlage durch die beschränkte Anzahl von Unterwindkammern. Letztere müssen nicht mehr gegeneinander abgedichtet werden, wenn örtlich unterschiedliche Sauerstoffkonzentrationen erwünscht sind. Die Entzündung von Rostdurchfall wird vermieden, da in der Unterwindkammer nur noch Luft vorliegt. Deshalb kann mit einem kleineren Unterwindvolumen gefahren werden. Da erfindungsgemäss reiner Sauerstoff zugeführt werden kann, kann sowohl eine Verbrennung als auch eine Entgasung bei höherer Temperatur durchgeführt werden.

Bei der Erfindung strömt nur Primärluft durch die Unterwindkammer, während der für eine schadstoffarme Verbrennung notwendige zusätzliche Sauerstoff erst am Wirkungsort, stirnseitig, in unmittelbarer Nähe der Rostoberfläche, auf der die Verbrennung oder Entgasung von Abfallstoffen stattfindet, zugeführt wird. Dadurch ist es möglich, den Sauerstoffgehalt der Verbrennungsluft gezielt dem jeweiligen Bedarf entsprechend einzustellen. Des weiteren kann auf die Ausbildung verschiedener Unterwindkammern, mit denen der Sauerstoffgehalt der Verbrennungsluft bei bekannten Verbrennungsanlagen beeinflusst werden soll, verzichtet werden, wodurch auch entsprechende Versorgungseinrichtungen für die Primärluft entfallen, so dass der erforderliche technische Aufwand bei der erfindungsgemässen Verbrennungsanlage verglichen mit bekannten Verbrennungsanlagen geringer ist.

Weitere vorteilhafte Weiterbildungen ergeben sich aus der nachfolgenden Beschreibung, der Zeichnung sowie den abhängigen Ansprüchen.

So wird vorgeschlagen, in einer vorgegebenen Richtung am Rost mehrere, aufeinander folgende Bereiche mit jeweils mindestens einer Austrittsöffnung zu definieren, wobei der aus der Austrittsöffnung jedes Bereiches austretende Sauerstoff-Volumenstrom regulierbar ist. Durch diese Unterteilung des Rostes in verschiedene Bereiche und die gezielte Regulierung des Sauerstoff-Volumenstromes ist eine sehr genaue Einstellung des Sauerstoffgehaltes der Verbrennungsluft möglich, wodurch eine Optimierung der zugeführten Sauerstoffmenge an jeder Stelle möglich wird. Bei dieser Ausführungsform der erfindungsgemässen Anlage ist es besonders vorteilhaft, wenn die in einem Bereich ausgebildeten Austrittsöffnungen an einem gemeinsamen Abschnitt des Sauerstoffzuführungssystems zur Gasversorgung angeschlossen sind.

An das Ende des Sauerstoffzuführungssystems der Gasversorgung sind vorzugsweise mehrere Düsen angeschlossen, die die Austrittsöffnungen für den zuzuführenden Sauerstoff aufweisen. Dabei ist es besonders vorteilhaft, wenn an einem Verbrennungsrost jeweils mindestens eine Düse mindestens einer der Primärluftdurchlässe zugeordnet ist, so dass der durch diesen Primärluftdurchlass strömenden Primärluft gezielt Sauerstoff zugeführt werden kann. Insbesondere ist es von Vorteil, wenn die Düse in dem Primärluftdurchlass angeordnet und in diesem gehalten ist. Auf diese Weise wird die während der Verbrennung der Brennstoffe sich erwärmende Düse durch die in den Primärluftdurchlass einströmende Primärluft gekühlt. Dieser Effekt wird noch verstärkt, wenn die Düse wärmeleitend im Primärluftdurchlass gehalten ist, so dass die in der Düse gespeicherte Wärmemenge schnell an den Rost abgegeben werden kann.

Des weiteren ist es von Vorteil, wenn die Düse derart ausgebildet ist, dass der aus der Düse austretende Sauerstoff mit annähernd Schallgeschwindigkeit austritt. Auf diese Weise werden einerseits Verstopfungen der Düse vermieden, andererseits wird die Düse durch die hohe Strömungsgeschwindigkeit des Sauerstoffes durch diesen zusätzlich gekühlt.

Bei einer bevorzugten Ausführungsform der Anlage ist das Sauerstoffzuführungssystem der Gasversorgung zusätzlich mit einer zweiten Gasversorgung verbindbar, durch die ein verglichen mit Sauerstoff reaktionsträgeres Gas den Austrittsöffnungen zugeführt werden kann. Mit Hilfe dieser zweiten Gasversorgung werden die Düsen (auch) durchströmt, wenn kein O₂ zugeführt wird, um Verstopfungen zu vermeiden.

Ferner wird noch vorgeschlagen, eine weitere Sauerstoffversorgung zur Sauerstoffanreicherung der Primärluft bei der Verbrennung vorzusehen, um einen ausreichenden Sauerstoffgehalt der Verbrennungsluft sicherzustellen.

Bei einer weiteren bevorzugten Ausführungsform der erfindungsgemässen Anlage für die Verbrennung von Abfallstoffen ist jeder Unterwindkammer mindestens ein Rostelement zugeordnet, die aus mehreren in einer vorgegebenen Richtung nebeneinander angeordneten, jeweils mit mindestens einem Primärluftdurchlass versehenen Rostblöcken gebildet ist. Dabei ist an jedem Rostblock einer vorgegebenen Anzahl an Rostblöcken, beispielsweise an jedem zweiten Rostblock, mindestens eine der Austrittsöffnungen vorgesehen. Sind zwei oder mehr Rostelemente in der Verbrennungsanlage ausgebildet, ist es besonders vorteilhaft, wenn die Zonen mit identisch ausgebildeten Rostblöcken ausgestattet sind, wobei die Austrittsöffnungen jeweils nebeneinander quer zu der vorgegebenen Richtung angeordneter Rostblöcke an einem gemeinsamen Abschnitt des Zuführungssystems der Gasversorgung angeschlossen sind. Auf diese Weise lassen sich die nebeneinander angeordneten Elemente in der vorgegebenen Richtung in verschiedene Bereiche unterteilen, die mit unterschiedlichen Sauerstoffmengen durch die verschiedenen Abschnitte des Sauerstoffzuführungssystems versorgt werden.

Da in der erfindungsgemässen Anlage die Abfallstoffe kontinuierlich zugeführt werden, werden sie auch kontinuierlich vorwärts gefördert und dabei verbrannt oder entgast. Aufgrund des abnehmenden Sauerstoffbedarfes gegen Ende des Rostes wird die Sauerstoffversorgung in Transportrichtung der Abfallstoffe gesehen entsprechend dem Bedarf gezielt reduziert.

Zum Transport der Abfallstoffe sind Rostblöcke des Rostes in der vorgegebenen Transportrichtung hintereinander gestaffelt unter einem Winkel geneigt angeordnet, wobei die Rostblöcke quer zur vorgegebenen Transportrichtung verlaufende Auflagekanten für die Brennstoffe bilden. Ein Teil der Rostblöcke ist zwischen einer Ausgangsposition und einer Hubposition beweglich gelagert. Durch die Bewegung der Rostblöcke wird der Brennstoff kontinuierlich entlang der Rostoberfläche transportiert. Die Austrittsöffnungen für Sauerstoff gemäss der Erfindung sind vorzugsweise an den nicht beweglichen Rostblöcken vorgesehen, da so auf ein aufwendiges Zuführungssystem, das die Bewegung der Rostblöcke andernfalls zulassen müsste, verzichtet werden kann.

Die Rostblöcke der erfindungsgemässen Anlage sind gekühlt, um durch den Sauerstoffeinsatz bewirkte hohe Temperaturen einer vorzeitigen Alterung vorzubeugen.

Nachfolgend wird die Erfindung anhand eines Ausführungsbeispieles unter Bezugnahme auf die Zeichnung näher erläutert. Darin zeigen:
- Fig. 1: eine Draufsicht auf ein Rostelement einer erfindungsgemässen Anlage in schematischer Darstellung;
- Fig. 2: eine Schnittansicht des Rostelementes entlang der Schnittlinie I-I in Fig. 1;
- Fig. 3: eine Schnittansicht des Rostelementes entlang der Schnittlinie II-II in Fig. 1;
- Fig. 4: eine vergrösserte, geschnittene Seitenansicht eines erfindungsgemässen Rostblocks;
- Fig. 5: eine teilweise geschnittene Draufsicht einer bei dem Rostblock nach Fig. 4 verwendeten Rohrleitungsverzweigung zur Sauerstoffversorgung;
- Fig. 6: eine Seitenansicht auf die Rohrleitungsverzweigung nach Fig. 5 und
- Fig. 7: eine vergrösserte Darstellung einer Düse der Rohrleitungsverzweigung nach Fig. 5.

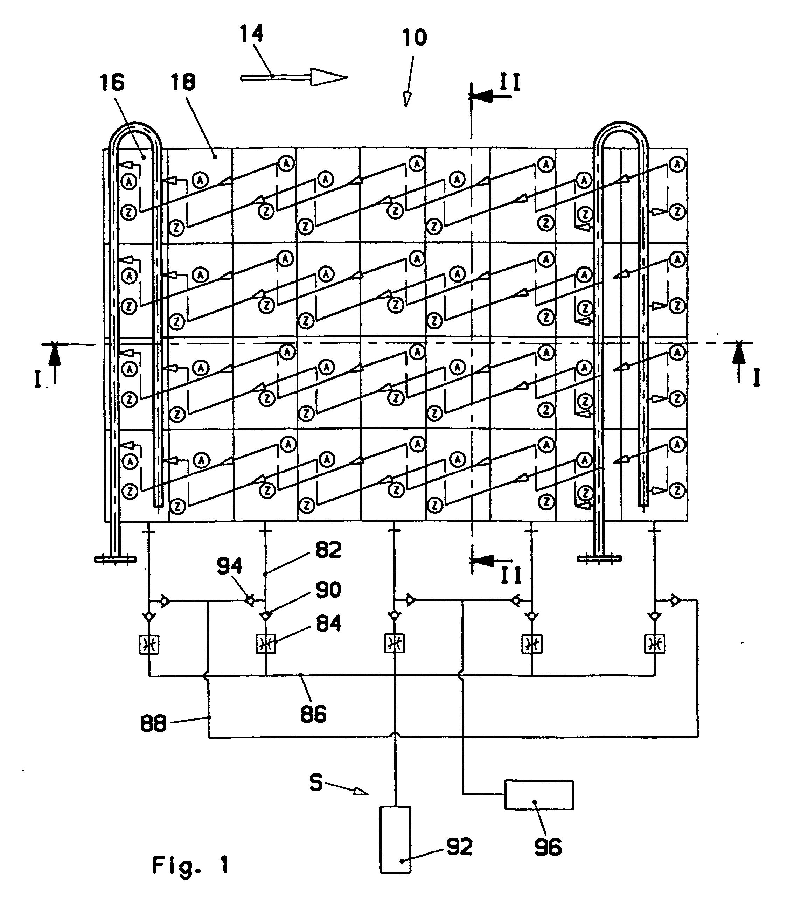

Fig. 1 zeigt eine Draufsicht eines Rostelementes 10, der einer Anlage zur thermischen Behandlung von Müll (nicht dargestellt) angeordnet ist.

Das Rostelement 10 ist aus bis zu 6x8 Rostblöcken 16, 18 gebildet. Ein Rost weist bis zu sechs Zonen mit je bis zu vier parallel angeordneten Rostelementen auf. Die Abfallstoffe werden auf den in Fig. 1 links dargestellten Bereich des Rostelementes 10 aufgegeben und kontinuierlich in Transportrichtung 14 gefördert und dabei verbrannt oder entgast.

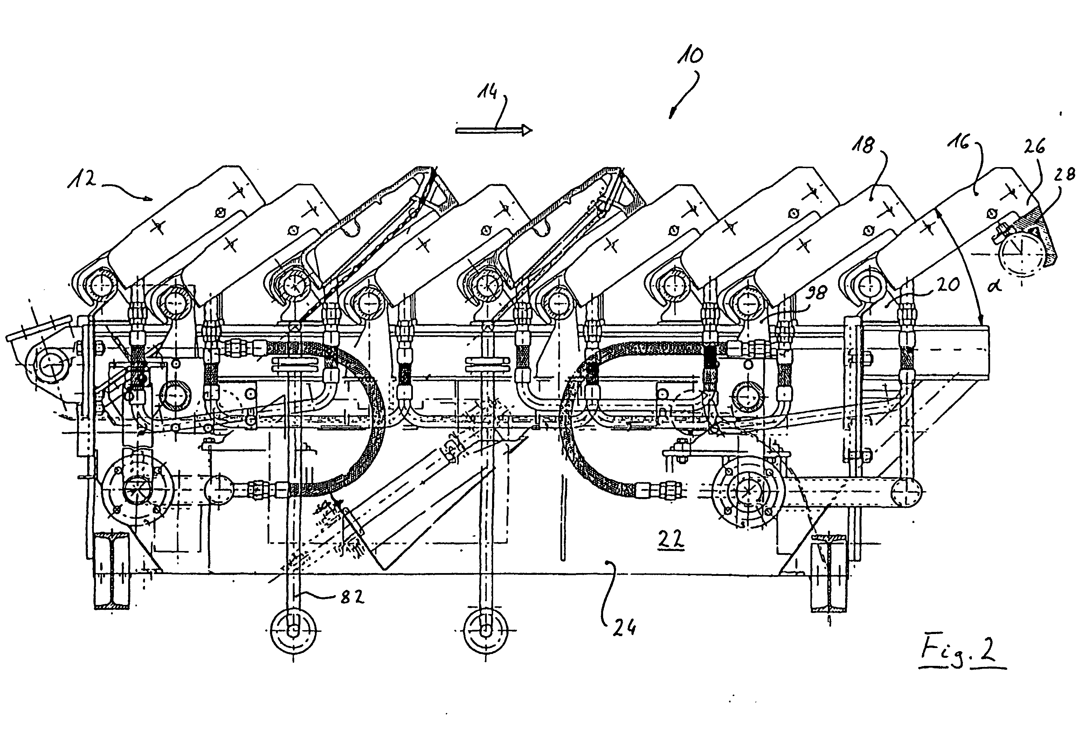

Wie Fig. 2 zeigt, sind die Rostblöcke 16 und 18 in Transportrichtung 14 gesehen mit einem Winkel α geneigt zur Horizontalen, d.h. zur Transportfläche des Rostes, angeordnet. Die feststehenden Rostblöcke 16 sind jeweils an einem Lagerbock 20 hier am Gehäuse 22 einer Unterwindkammer 24 schwenkbar gelagert. Dabei stützt sich der in Transportrichtung 14 gesehen letzte, feststehende Rostblock 16 des in Transportrichtung 14 letzten Rostelementes des Rostes, der in Fig. 2 rechts dargestellt ist, mit einer an seiner Unterseite ausgebildeten Erhebung 26 an einer feststehenden Auflage 28 ab.

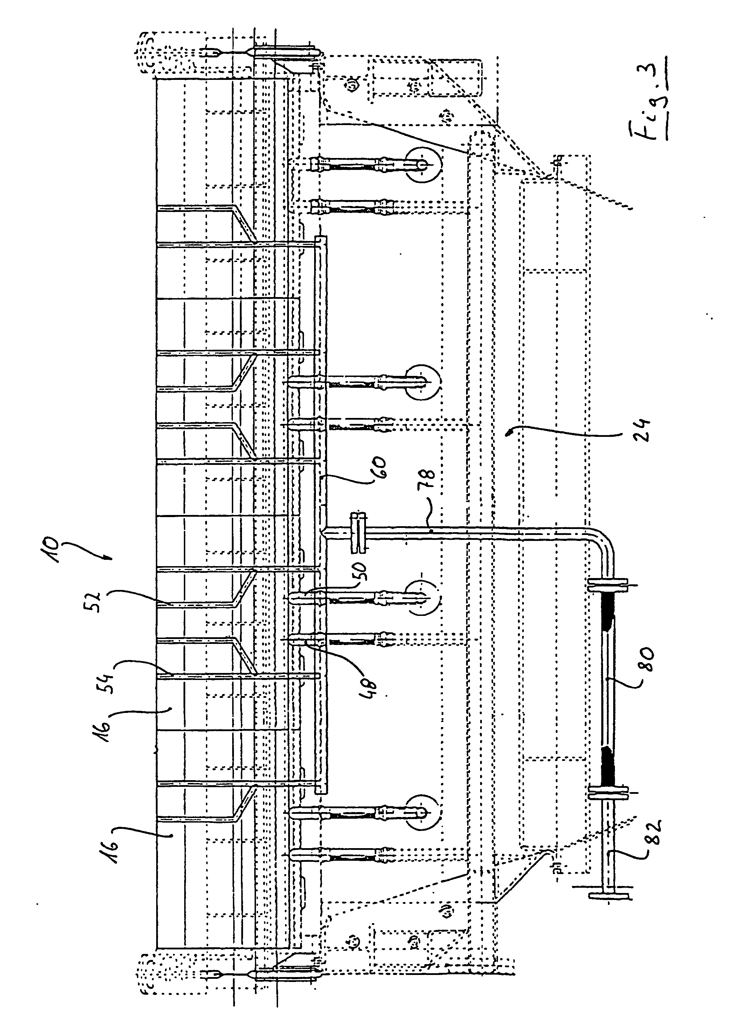

Wie Fig. 4 zeigt, in der einer der feststehenden Rostblöcke 16 in vergrösserter Schnittansicht dargestellt ist, weist der Rostblock 16 einen ersten im wesentlichen L-förmigen Profilabschnitt 30 auf, mit einem ersten Schenkel 32, einem sich daran anschliessenden zweiten L-förmigen Profilabschnitt 34, mit dem der Rostblock 16 schwenkbar an dem Lagerbock 20 gelagert ist. Das in Fig. 4 rechts dargestellte U-förmige Profil 36 bildet die Frontplatte 42 des Rostblockes 16. Zwischen erstem L-förmigem und U-förmigem Profil sind mehrere hülsenförmige Durchlässe 44 angeordnet, wovon in Fig. 4 nur einer zu sehen ist. Die hülsenförmigen Durchlässe 44 können als Kanal für an dem Rostblock 16 ausgebildete Primärluftdurchlässe dienen, durch die in die Unterwindkammer 24 einströmende Primärluft dem Feuerraum zugeführt wird. Der Profilabschnitt 30 bildet zusammen mit einer Platte 46 einen abgeschlossenen Hohlraum, in dem die (nicht dargestellte) Wasserkühlung angeordnet ist. Wassergekühlte Rostblöcke dieser Art sind in den EP-A-0 713 056 und EP-A-0 743 488 beschrieben.

Wie Fig. 3 zeigt, in der vier feststehende Rostblöcke 16 nebeneinander angeordnet sind, hat jeder Rostblock 16 zwei Anschlusstutzen 48 und 50, die mit dem im Profilabschnitt 30 gebildeten Hohlraum in Verbindung stehen. Der in Fig. 3 jeweils links dargestellte Anschlusstutzen 48 jedes Rostblocks 16 dient als Anschluss für einen Kühlwasserzulauf. Der jeweils rechts dargestellte Anschlusstutzen 50 dient als Kühlwasserablauf für das durch den Anschlusstutzen 48 einströmende Kühlwasser. Wie Fig. 3 weiter zeigt, sind an den beiden mittleren Rostblöcken 16 jeweils zwei Rohrleitungsverzweigungen 52 und 54 befestigt, während an den beiden äusseren Rostblöcken 16 jeweils nur eine Rohrleitungsverzweigung 52 bzw. 54 vorgesehen ist. Die beiden Rohrleitungsverzweigungen 52 und 54 sind spiegelsymmetrisch gestaltet, so dass die Beschreibung auf die Rohrleitungsverzweigung 52 beschränkt werden kann.

Fig. 5 zeigt einen Teil des Sauerstoffzuführungssystems S mit einer Rohrleitungsverzweigung 52, an dessen unten dargestelltem Ende eine Rohrverschraubung 56 vorgesehen ist. Die Rohrverschraubung 56 ist mit einem Rohrstutzen 58 gasdicht verschraubt, der von einer quer zur Transportrichtung 14 unter den Rostblöcken 16 im Gehäuse 22 der Unterwindkammer 24 befestigten Versorgungsleitungen 60 absteht.

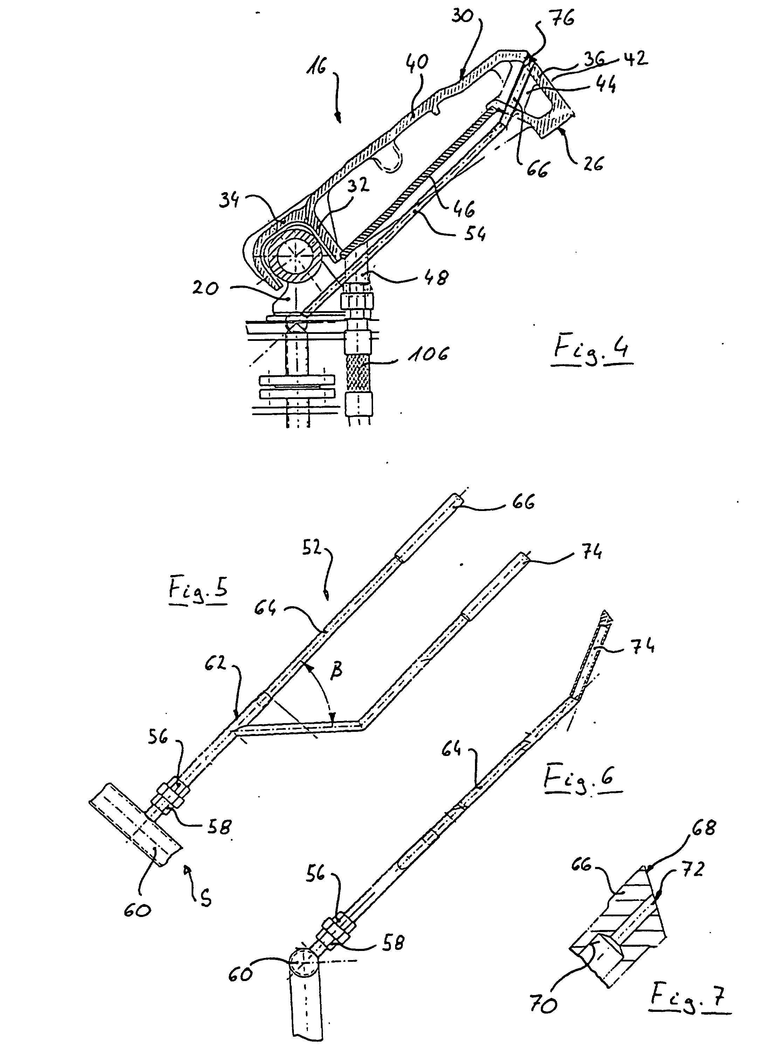

An die Rohrverschraubung 56 schliesst sich eine Verzweigung 62 an, die einen gerade verlaufenden Rohrabschnitt und einen unter einem Winkel β schräg zu dessen Längsrichtung verlaufenden zweiten Rohrabschnitt aufweist. In den gerade verlaufenden Rohrabschnitt ist ein in dessen Längsrichtung verlaufendes Leitungsrohr 64 eingesetzt, an dessen Ende eine Düse 66 befestigt ist. Die Düse 66 verläuft gleichfalls in Längsrichtung des Leitungsrohres 64, ist jedoch geneigt zu der von der Verzweigung 62 aufgespannten Ebene, wie Fig. 6 zeigt.

Der zweite Rohrabschnitt 62 ist auf etwa halber Länge der Rohrleitungsverzweigung 52 derart abgewinkelt, dass sein Endabschnitt parallel zum Leitungsrohr 64 verläuft. Auch hier ist am Ende des zweiten Rohrabschnittes eine zur Düse 66 identisch ausgebildete Düse 74 befestigt.

In Fig. 7 ist eine vergrösserte Darstellung der Düse 66 gezeigt. Die Düse 66 ist an ihrer Stirnseite 68 abgeschrägt und weist eine mit dem Leitungsrohr 64 in Verbindung stehende, gestufte Durchgangsbohrung 70 auf, deren Abschnitt geringeren Durchmessers in einer an der Stirnseite 68 der Düse 66 ausgebildeten Austrittsöffnung 72 endet. Durch die Verkleinerung des Strömungsquerschnittes in der Durchgangsbohrung 70 der Düse 66 wird erreicht, dass bei entsprechendem Leitungsdruck im Leitungsrohr 64 das durch die Durchgangsbohrung 70 strömende Gas mit annähernd Schallgeschwindigkeit aus der Austrittsöffnung 72 strömt.

Wie Fig. 4 weiter zeigt, ist an dem Übergang zwischen der Basis 40 des U-förmigen Profilabschnittes und dem zweiten Schenkel 36 in diesem ein Durchlass 76 ausgebildet, in die die Düse 66 bzw. 74 eingesetzt ist. Nach einer anderen Ausführungsform können zum Durchlass 76 mehrere Öffnungen für den Primärluftdurchlass vorhanden sein. Anstelle des beschriebenen Leitungssystems können als Sauerstoffzuführung auch im Rostblock 16 ausgeformte Kanäle dienen, die beispielsweise durch Leitungen mit einer Gasversorgung verbunden sind. Die Düsen 66, 74 können jeweils auch in einem Primärluftdurchlass gehalten sein.

Wie in Fig. 3 ferner dargestellt, ist die Versorgungsleitung 60 an ein abgewinkeltes Rohrzwischenstück 78 angeflanscht, das seinerseits durch ein gerades Rohrzwischenstück 80 an ein aus der Unterwindkammer 24 hervorstehendes Flanschstück 82 angeschlossen ist. In entsprechender Weise ist für jede weitere Reihe fest stehender Rostblöcke 16 eine identische Versorgungsleitung 60 ausgebildet. Wie Fig. 1 zeigt, ist das Flanschstück 82 jeder Versorgungsleitung 60 jeder Reihe Rostblöcke 16 wiederum mit einem Rückschlagventil 90 und einem Drosselventil 84 verbunden. Die Drosselventile 84 sind ihrerseits über eine Leitung 86 mit einer Sauerstoffquelle 92 verbunden. Die Rückschlagventile 90 bzw. die Rückschlagventile 94 verhindern ein Einströmen von Stickstoff bzw. Sauerstoff in die Sauerstoffleitung 86 bzw. in die Stickstoffleitung 88.

Da jede Reihe feststehender Rostblöcke 16, die quer zur Transportrichtung 14 nebeneinander angeordnet sind, an einer gemeinsamen Versorgungsleitung 60 angeschlossen sind, kann durch entsprechendes automatisches Einstellen des Sauerstoff-Volumenstroms mit Hilfe der jeder Versorgungsleitung 60 zugeordneten Drosselventile 84 gezielt der Sauerstoffgehalt in der Verbrennungsluft im Bereich dieser Reihe Rostblöcke 16 eingestellt werden.

Bei niedrigem Sauerstoffdruck strömt Stickstoff aus der Stickstoffquelle 96 unter hohem Druck in die Versorgungsleitungen 60, um die Verstopfung der Düsen 66 bzw. 74 zu verhindern. Anstelle von Stickstoff kann auch ein anderes verglichen mit Sauerstoff reaktionsträgeres Gas verwendet werden. Zum Freihalten der Düsen 66 und 74 eignet sich andererseits auch entsprechend komprimierte Luft aus der Umgebung.

Durch die Anordnung der Düsen 66 und 74 in den Primärluftdurchlässen wird ferner erreicht, dass die Düsen 66 und 74 der Rohrleitungsverzweigungen 52 und 54 zur Sauerstoffversorgung kontinuierlich gekühlt werden. Die Rostblöcke 16 und 18 werden durch das Kühlwassersystem gekühlt (wie es aus dem Stand der Technik bekannt ist).

## Patentansprüche

1. Anlage für die thermische Behandlung von Abfallstoffen mit einem von Rostblöcken gebildeten Rost (10), auf dessen Oberfläche die Abfallstoffe zur thermischen Behandlung aufliegen, wobei ein Teil der Rostblöcke zwischen einer Ausgangsposition und einer Hubposition beweglich gelagert ist und durch die Bewegung der Rostblöcke die Abfallstoffe kontinuierlich entlang der Rostoberfläche transportiert werden, wobei der Rost (10) Gasdurchlässe aufweist, die mit einer Gasversorgung für die Rostoberfläche in Verbindung stehen, **dadurch gekennzeichnet, dass** die Gasversorgung mindestens ein Sauerstoffzuführungssystem (S) aufweist, dessen Austrittsöffnungen (72) stirnseitig gegen den Feuerungsraum in gekühlten Rostblöcken angeordnet sind.

2. Anlage nach Anspruch 1, **dadurch gekennzeichnet, dass** am Rost (10) in einer vorgegebenen Richtung (14) mehrere, aufeinander folgende Bereiche mit jeweils mindestens einer Austrittsöffnung (72) definiert sind, wobei der aus der Austrittsöffnung (72) jedes Bereiches austretende Sauerstoff-Volumenstrom regulierbar ist.

3. Anlage nach Anspruch 2, **dadurch gekennzeichnet, dass** in jedem Bereich mindestens eine Reihe aus mehreren, quer zu der vorgegebenen Richtung (14) nebeneinander ausgebildeten Austrittsöffnungen (72) vorgesehen ist, wobei jeweils die Austrittsöffnungen (72) eines der Bereiche an einem gemeinsamen Abschnitt (60) des Sauerstoffzuführungssystems (S) angeschlossen sind.

4. Anlage nach Anspruch 1, 2 oder 3, **dadurch gekennzeichnet, dass** das Sauerstoffzuführungssystem (S) mindestens eine einem Primärluftdurchlass (44) zugeordnete Düse (66,74) aufweist, an der die Austrittsöffnung (72) vorgesehen ist.

5. Anlage nach Anspruch 4, **dadurch gekennzeichnet, dass** die Düse (66,74) in dem Primärluftdurchlass (44) angeordnet und in ihm vorzugsweise wärmeleitend gehalten ist.

6. Anlage nach Anspruch 4 oder 5, **dadurch gekennzeichnet, dass** die Düse (66,74) eine Durchgangsbohrung (70) aufweist, die derart gestuft ist, dass der aus der Düse (66,74) austretende Gas-Volumenstrom zumindest annähernd Schallgeschwindigkeit erreicht.

7. Anlage nach einem der vorangehenden Ansprüche, **dadurch gekennzeichnet, dass** das Sauerstoffzuführungssystem (S) mit einer zweiten Gasversorgung (96) verbindbar ist, durch die ein verglichen mit Sauerstoff reaktionsträgeres Gas zum Freihalten der Austrittsöffnungen (72) der Düsen (66,74) in das Sauerstoffzuführungssystem (S) einleitbar ist.

8. Anlage nach Anspruch 7, **dadurch gekennzeichnet, dass** sowohl in einer Zuführleitung des Sauerstoffzuführungssystems (S) als auch in einer Zuführleitung der Gasversorgung (96) jeweils ein Rückschlagventil (90,94) angeordnet ist

9. Anlage nach einem der vorhergehenden Ansprüche, **dadurch gekennzeichnet, dass** sie ein Gehäuse umfasst, das eine Unterwindkammer (24) definiert, und jeder Unterwindkammer (24) mindestens ein Rostelement (12) zugeordnet ist, das aus mehreren in einer vorgegebenen Richtung (14) nebeneinander angeordneten, Rostblöcken (16, 18) gebildet ist, wobei an jedem Rostblock (16) einer vorgegebenen Anzahl an Rostblöcken (16), vorzugsweise an jedem zweiten Rostblock (16), mindestens eine der Austrittsöffnungen (72) vorgesehen ist.

10. Anlage nach Anspruch 9, **dadurch gekennzeichnet, dass** die an jeweils einem gemeinsamen Rostblock (16) vorgesehenen Austrittsöffnungen (72) an einem gemeinsamen Abschnitt (60) des Sauerstoffzuführungssystems (S) der Gasvorgung angeschlossen sind.

11. Anlage nach Anspruch 9 oder 10, **dadurch gekennzeichnet, dass** mindestens zwei Rostblockreihen mit identisch ausgebildeten Rostblöcken (16, 18) vorgesehen sind, wobei die Austrittsöffnungen (72) jeweils nebeneinander quer zu der vorgegebenen Richtung (14) angeordneter Rostblöcke (16) an einem gemeinsamen Abschnitt (60) des Sauerstoffzuführungssystems der Gasversorgung angeschlossen sind.

12. Anlage nach einem der vorangehenden Ansprüche mit beweglichen und nicht beweglichen Rostblöcken, **dadurch gekennzeichnet, dass** die nicht beweglichen Rostblöcke (16) mit den Austrittsöffnungen (72) versehen sind.

13. Rostblock für eine Anlage nach einem der vorangehenden Ansprüche mit mindestens einem hülsenförmigen Durchlass (44), **dadurch gekennzeichnet, dass** in dem Durchlass mindestens eine Düse (66) gehalten ist, an der die Austrittsöffnung (72) für den zuzuführenden Sauerstoff ausgebildet ist.

14. Rostblock für eine Anlage nach Anspruch 13, **dadurch gekennzeichnet, dass** der Durchlass (44) ein Primärluftdurchlass ist.

15. Rostblock nach Anspruch 13 oder 14, **dadurch gekennzeichnet, dass** die Düse (66) an eine durch den Rostblock (16, 18) geführte Leitung (52,54) angeschlossen ist, die mit der Gasversorgung der Anlage verbindbar ist.

16. Rostblock nach Anspruch 15, **dadurch gekennzeichnet, dass** mindestens ein weiterer Primärluftdurchlass (44) vorgesehen ist, in dem eine weitere Düse (74) für die Sauerstoffzufuhr ausgebildet ist, und dass die Leitung (52,54) der ersten Düse (66) eine Abzweigung (62) aufweist, die mit der weiteren Düse (74) verbunden ist.

## Claims

1. Plant for the thermal treatment of waste materials, having a grate (10) which is formed by grate blocks and on the surface of which the waste materials lie for the thermal treatment, some of the grate blocks being mounted so as to be movable between an initial position and a lifting position and the waste materials being transported continuously along the grate surface by the movement of the grate blocks, the grate (10) having gas passages which are connected to a gas supply for the grate surface, **characterized in that** the gas supply has at least one oxygen feed system (S), the discharge openings (72) of which are arranged at the end faces against the combustion chamber in cooled grate blocks.

2. Plant according to Claim 1, **characterized in that** a plurality of successive regions with in each case at least one discharge opening (72) are defined on the grate (10) in a predetermined direction (14), in which case the volumetric oxygen flow discharging from the discharge opening (72) of each region can be regulated.

3. Plant according to Claim 2, **characterized in that** at least one row of several discharge openings (72) formed side by side transversely to the predetermined direction (14) is provided in each region, in each case the discharge openings (72) of one of the regions being connected to a common section (60) of the oxygen feed system (S).

4. Plant according to Claim 1, 2 or 3, **characterized in that** the oxygen feed system (S) has at least one nozzle (66, 74), which is assigned to a primary-air passage (44) and on which the discharge opening (72) is provided.

5. Plant according to Claim 4, **characterized in that** the nozzle (66, 74) is arranged in the primary-air passage (44) and is held in it preferably in a heat-conducting manner.

6. Plant according to Claim 4 or 5, **characterized in that** the nozzle (66, 74) has a through-hole (70), which is stepped in such a way that the volumetric gas flow discharging from the nozzle (66, 74) reaches at least approximately sound velocity.

7. Plant according to one of the preceding claims, **characterized in that** the oxygen feed system (S) can be connected to a second gas supply (96), by means of which a gas which is more inert compared with oxygen can be directed into the oxygen feed system (S) in order to keep the discharge openings (72) of the nozzles (66, 74) clear.

8. Plant according to Claim 7, **characterized in that** in each case a check valve (90, 94) is arranged both in a feed line of the oxygen feed system (S) and in a feed line of the gas supply (96).

9. Plant according to one of the preceding claims, **characterized in that** it comprises a housing, which defines an undergrate chamber (24), and **characterized in that** at least one grate element (12), which is formed from a plurality of grate blocks (16, 18) arranged side by side in a predetermined direction (14), is assigned to each undergrate chamber (24), at least one of the discharge openings (72) being provided on every grate block (16) of a predetermined number of grate blocks (16), preferably on every second grate block (16).

10. Plant according to Claim 9, **characterized in that** the discharge openings (72) provided in each case on a common grate block (16) are connected to a common section (60) of the oxygen feed system (S) of the gas supply.

11. Plant according to Claim 9 or 10, **characterized in that** at least two rows of grate blocks are provided with grate blocks (16, 18) of identical design, the discharge openings (72) of in each case grate blocks (16) arranged side by side transversely to the predetermined direction (14) being connected to a common section (60) of the oxygen feed system of the gas supply.

12. Plant according to one of the preceding claims, having movable and fixed grate blocks, **characterized in that** the fixed grate blocks (16) are provided with the discharge openings (72).

13. Grate block for a plant according to one of the preceding claims, having at least one sleeve-shaped passage (44), **characterized in that** at least one nozzle (66), on which the discharge opening (72) for the oxygen to be fed is formed, is held in the passage.

14. Grate block for a plant according to Claim 13, **characterized in that** the passage (44) is a primary-air passage.

15. Grate block according to Claim 13 or 14, **characterized in that** the nozzle (66) is connected to a line (52, 54) which is passed through the grate block (16, 18) and can be connected to the gas supply of the plant.

16. Grate block according to Claim 15, **characterized in that** at least one further primary-air passage (44) is provided, in which a further nozzle (74) for the oxygen feed is formed, and **characterized in that** the line (52, 54) of the first nozzle (66) has a branch (62), which is connected to the further nozzle (74).

## Revendications

1. Installation pour le traitement thermique de déchets, comprenant une grille (10) formée par des blocs de grille, dans laquelle les déchets à traiter thermiquement reposent sur la surface de la grille, une partie des blocs de grille étant montés mobiles entre une position de départ et une position relevée et, du fait du mouvement des blocs de grille, les déchets sont transportés en continu le long de la surface de la grille, ladite grille (10) comportant des passages de gaz qui communiquent avec une alimentation en gaz pour la surface de la grille, **caractérisée en ce que** l'alimentation en gaz comprend au moins un système d'amenée d'oxygène (S) dont les ouvertures de sortie (72) sont agencées du côté frontal à l'opposé de la chambre de combustion dans des blocs de grille refroidis.

2. Installation selon la revendication 1, **caractérisée en ce que** plusieurs zones qui se suivent mutuellement dans une direction prédéterminée (14) et qui comportent au moins une ouverture de sortie (72) sont définies sur la grille (10), et **en ce que** le courant volumétrique d'oxygène sortant de l'ouverture de sortie (72) de chaque zone est susceptible d'être régulé.

3. Installation selon la revendication 2, **caractérisée en ce que** dans chaque zone sont prévues au moins une rangée de plusieurs ouvertures de sortie (72) réalisées les unes à côté des autres transversalement à la direction prédéterminée (14), les ouvertures de sortie (72) de l'une des zones étant respectivement raccordées à un tronçon commun (60) du système d'amenée d'oxygène (S).

4. Installation selon la revendication 1, 2 ou 3, **caractérisée en ce que** le système d'amenée d'oxygène (S) comprend au moins une buse (66, 74) associée à un passage d'air primaire (44), au niveau de laquelle est prévue l'ouverture de sortie (72).

5. Installation selon la revendication 4, **caractérisée en ce que** la buse (66, 74) est agencée dans le passage d'air primaire (44) et est maintenue dans celui-ci de préférence en conduction thermique.

6. Installation selon la revendication 4 ou 5, **caractérisée en ce que** la buse (66, 74) comporte un perçage traversant (70) qui présente des gradins de telle manière que le courant volumétrique du gaz qui sort de la buse (66, 74) atteint au moins approximativement la vitesse du son.

7. Installation selon l'une des revendications précédentes, **caractérisée en ce que** le système d'amenée d'oxygène (S) est susceptible d'être relié à une seconde alimentation de gaz (96) via laquelle un gaz à réaction plus inerte par comparaison à l'oxygène peut être injecté dans le système d'amenée d'oxygène (S) pour maintenir libres les ouvertures de sortie (72) des buses (66, 74).

8. Installation selon la revendication 7, **caractérisée en ce qu'**un clapet antiretour respectif (90, 94) est agencé aussi bien dans une conduite d'amenée du système d'amenée d'oxygène (S) que dans une conduite d'amenée de l'alimentation de gaz (96).

9. Installation selon l'une des revendications précédentes, **caractérisée en ce qu'**elle comprend un boîtier qui définit une chambre de soufflage inférieure (24), et au moins un élément de grille (12) est associé à chaque chambre de soufflage inférieure (24), ledit élément de grille étant formé par plusieurs blocs de grille (16, 18) agencés les uns à côté des autres dans une direction prédéterminée (14), et dans laquelle l'une au moins des ouvertures de sortie (72) est prévue sur chaque bloc de grille (16) d'un nombre prédéterminé de blocs de grille (16), de préférence sur un bloc de grille sur deux (16).

10. Installation selon la revendication 9, **caractérisée en ce que** les ouvertures de sortie (72) prévues respectivement sur un bloc de grille commun (16) sont raccordées à un tronçon commun (60) du système d'amenée d'oxygène (S) de l'alimentation de gaz.

11. Installation selon la revendication 9 ou 10, **caractérisée en ce qu'**il est prévu au moins deux rangées de blocs de grille avec des blocs de grille (16, 18) de réalisation identique, les ouvertures de sortie (72) de blocs de grille (16) respectifs agencés les uns à côté des autres transversalement à la direction prédéterminée (14) étant raccordées à un tronçon commun (60) du système d'amenée d'oxygène de l'alimentation de gaz.

12. Installation selon l'une des revendications précédentes, comprenant des blocs de grille mobiles et des blocs de grille immobiles, **caractérisée en ce que** les blocs de grille (16) immobiles sont pourvus des ouvertures de sortie (72).

13. Bloc de grille pour une installation selon l'une des revendications précédentes, comprenant au moins une traversée (44) en forme de douille, **caractérisée en ce qu'**au moins une buse (66) est maintenue dans la traversée, buse sur laquelle est formée l'ouverture de sortie (72) pour l'oxygène à amener.

14. Bloc de grille pour une installation selon la revendication 13, **caractérisée en ce que** la traversée (44) est une traversée d'air primaire.

15. Bloc de grille selon la revendication 13 ou 14, **caractérisée en ce que** la buse est raccordée à une conduite (52, 54) menée à travers le bloc de grille (16, 18), qui peut être raccordée à l'alimentation de gaz de l'installation.

16. Bloc de grille selon la revendication 15, **caractérisée en ce qu'**il est prévu au moins un autre passage d'air primaire (44) dans lequel est réalisée une autre buse (74) pour l'amenée d'oxygène, et **en ce que** la conduite (52, 54) de la première buse (66) comporte une ramification (62) qui est raccordée à l'autre buse (74).
